# EUROPEAN PATENT SPECIFICATION

(11) **EP 4 565 639 B1**
(45) Date of publication and mention of the grant of the patent: **04.03.2026**
(21) Application number: 22761975.6
(22) Date of filing: 02.08.2022
(51) Int. Cl.: C08G 77/12, C08G 77/20, C08G 77/00, C08L 83/04, C09J 183/04

(54) **SILICONE COMPOSITIONS**
SILIKONZUSAMMENSETZUNGEN
COMPOSITIONS DE SILICONE

(43) Date of publication of application: 11.06.2025
(73) Proprietor: Wacker Chemie AG, 81671 München (DE)
(72) Inventor: LEE, SeungA, Seongnam-si Gyeonggi-do 13494 (KR)
(74) Representative: Mieskes, Klaus Theoderich
(86) International application number: PCT/EP2022/071766
(87) International publication number: WO 2024/027906

(56) References cited:
- EP-A1- 2 452 994
- US-A1- 2006 128 881
- US-A1- 2019 292 417
- US-A1- 2019 375 937

## Description

### TECHNICAL FIELD

The present disclosure relates to a silicone composition, and specifically, to a rapid-curing silicone adhesive composition applicable to plastic substrates.

### BACKGROUND

A silicone adhesive has a high stability as an interlayer adhesive material by virtue of its characteristics due to the flexible structure such as low shrinkage rate and stress relief function, as well as excellent properties of silicone itself such as heat resistance and chemical resistance. Due to these characteristics, silicone adhesives are used as adhesive materials in various fields such as industrial, electrical and electronic, and automotive applications.

In the fields of industrial, electrical and electronic, and automotive applications, light weight and design diversification are being pursued in common recently, and to this end, the use of high-performance engineering plastics such as polycarbonate (PC), polyethylene terephthalate (PET) and polymethyl methacrylate (PMMA) which are injectable and light in weight to be applied to various designs is increasing.

Patent EP 2 452 994 describes an addition curable silicone composition used as an adhesive for bonding substrates such as polycarbonate. The silicone compositions comprises an organopolysiloxane end-capped at both ends with a vinyl group, an organopolysiloxane resin comprising M, M^{Vi} and Q units, an organohydrogen polysiloxane comprising at least two SiH groups per molecule and an organohydrogen polysiloxane comprising both SiH and Si-phenyl groups. The composition further comprises a hydrosilylation catalyst, a titanium compound as coupling agent and a compound comprising glycidyl or acryl group as adhesion promoter. Other alternatives as organohydrogen polysiloxane comprising both SiH and phenyl groups are also described and are used to impart adhesiveness to the composition. The composition exhibits rapid cure.

Patent US 2019/375937 describes an addition-curable silicone composition exhibiting bonding properties to polycarbonate substrates and comprising an organopolysiloxane end-capped at both ends with a vinyl group, an organohydrogen polysiloxane comprising at least two SiH groups per molecule, an organohydrogen polysiloxane comprising both SiH and Si-phenyl groups. The compositions further comprise a hydrosilylation catalyst and a reaction inhibitor.

Patent US 2006/128881 relates to an addition-curable silicone composition exhibiting good adhesiveness on polycarbonate substrates is described. The composition comprises an organopolysiloxane end-capped at both ends with a vinyl group, an organopolysiloxane resin comprising M, M^{Vi}, D, D^{Vi} and Q units, an organohydrogen polysiloxane comprising at least two SiH groups per molecule, an alkoxysilane as adhesion promoter and a catalytic solution comprising an hydrosilylation catalyst and a phosphine compound of formula as reaction inhibitor.

Finally patent US 2019/292417 discloses the preparation of a solvent-free silicone composition comprising an organopolysiloxane having at least two alkenyl groups each bonded to a silicon atom in a molecule, and having no or at least one aryl group in a molecule, an organohydrogenpolysiloxane having at least three hydrogen atoms each bonded to a silicon atom in a molecule and an aryl group in a number that a percentage of the total number of the aryl groups relative to the total number of hydrogen atoms and groups each bonded to a silicon atom is at least 8% and a catalytic amount of a catalyst based on a platinum group metal.

Conventionally known silicone adhesives do not have functional groups capable of chemically adhering to a surface of such high-performance engineering plastics, and thus their use has been limited because adhesive strength is not high. In addition, in the case of the conventional thermosetting silicone adhesive, since a curing process was carried out at a high temperature for a long time, there is a risk of causing dimensional deformation of the plastic substrate, and thus its use has been limited.

### OBJECTIVE OF INVENTION

Embodiments of the present disclosure are directed to a silicone composition exhibiting a stable adhesive strength to high-performance engineering plastics such as polycarbonate (PC), polyethylene terephthalate (PET), and polymethyl methacrylate (PMMA).

Embodiments of the present disclosure are also directed to a silicone composition rapidly curing at a low temperature, which is capable of minimizing dimensional deformation of plastic substrates.

### TECHNICAL MEANS

According to an embodiment of the present disclosure, a silicone composition includes:
(a1) a first organopolysiloxane including a C₂ to C₂₀ alkenyl group bonded to at least one Si at both ends or a chain, the first organopolysiloxane formed from a unit represented by (R₃SiO_{1/2})ₐ(R₂SiO_{2/2})_{b}(RSiO_{3/2})_{c}(SiO_{4/2})_{d} (wherein a is in a range of 1 to 50, b is in a range of 100 to 500, c is in a range of 0 to 50, and d is in a range of 0 to 50);
(a2) a second organopolysiloxane including a C₂ to C₂₀ alkenyl group bonded to at least one Si at both ends or a chain, and including at least one unit represented by SiO_{4/2}; and
(b) an organohydrogen siloxane comprising at least two SiH functional groups per molecule and comprising at least one C₆ to C₂₀ aryl group.

### EFFECTS OF THE INVENTION

According to one or more embodiments of the present disclosure, the silicone composition according to the present disclosure exhibits similar adhesion to most substrates including plastics, thereby applicable for bonding, sealing, and assembly of, for example, automobiles and electronic components, including adhesion between different types.

In addition, the silicone composition of the present invention has excellent heat resistance and stress relief properties, thereby applicable to outdoor display devices or automotive display devices exposed to severe conditions, and it is cured rapidly at a low temperature to have adhesion, thereby applicable to areas where dimensional stability of a module is important, such as a curved display.

In addition, the silicone composition of the present disclosure may be used for nozzle dispensing, thus applicable regardless of the shape or application areas of substrates.

### DETAILED DESCRIPTION OF THE INVENTION

An embodiment of the present disclosure provides a silicone composition including: (a1) a first organopolysiloxane including a C₂ to C₂₀ alkenyl group bonded to at least one Si at both ends or a chain, the first organopolysiloxane formed from a unit represented by (R₃SiO_{1/2})ₐ(R₂SiO_{2/2})_{b}(RSiO_{3/2})_{c}(SiO_{4/2})_{d} (where a is in a range of 1 to 50, b is in a range of 100 to 500, c is in a range of 0 to 50, and d is in a range of 0 to 50); (a2) a second organopolysiloxane including a C₂ to C₂₀ alkenyl group bonded to at least one Si at both ends or a chain, and including at least one unit represented by SiO_{4/2}; and (b) an organohydrogen siloxane comprising at least two SiH functional groups per molecule and comprising at least one C₆ to C₂₀ aryl group.

Hereinafter, each component will be described in detail.

### 1. Component (a)

Component (a) is an organopolysiloxane. The silicone composition according to an embodiment of the present disclosure includes, as the component (a), two or more organopolysiloxanes of (a1) a first organopolysiloxane including a C₂ to C₂₀ alkenyl group bonded to at least one Si at both ends or a chain, the first organopolysiloxane formed from a unit represented by (R₃SiO_{1/2})ₐ(R₂SiO_{2/2})_{b}(RSiO_{3/2})_{c}(SiO_{4/2})_{d} (where a is in a range of 1 to 50, b is in a range of 100 to 500, c is in a range of 0 to 50, and d is in a range of 0 to 50); and (a2) a second organopolysiloxane including a C₂ to C₂₀ alkenyl group bonded to at least one Si at both ends or a chain, and including at least one unit represented by SiO_{4/2}.

The first organopolysiloxane (a1) and the second organopolysiloxane (a2) may each independently have a linear structure, a branched chain structure, a cyclic structure, or a linear structure having a partially branched or partially cyclic structure.

The first organopolysiloxane (a1) and the second organopolysiloxane (a2) may each independently include a C₂ to C₂₀ alkenyl group, and preferably a C₂ to C₁₂ alkenyl group such as a vinyl group, a propenyl group, an isopropenyl group, a butenyl group, a hexenyl group, and an octenyl group.

The first and second organopolysiloxanes both contain an organyl group bonded to a silicon atom, in addition to the alkenyl group bonded to a silicon (Si) atom. As used herein, the organyl group may be a monovalent hydrocarbon group having 1 to 20 carbon atoms, specifically 1 to 10 carbon atoms, and more specifically 1 to 8 carbon atoms, and may be substituted or unsubstituted. For example, the organyl group may be a C₁ to C₂₀ alkyl group such as a methyl group, an ethyl group, a propyl group, an isopropyl group, a butyl group, an isobutyl group, a tert-butyl group, a pentyl group, a neopentyl group, a hexyl group, an octyl group, a nonyl group, and a decyl group; a C₆ to C₂₀ aryl group such as a phenyl group, a tolyl group, a xylyl group, and a naphthyl group; and a C₇ to C₂₀ aralkyl group such as a phenylethyl group and a phenylpropyl group.

It is preferable that the first organopolysiloxane (a1) and the second organopolysiloxane (a2) each have a weight average molecular weight in a range of 1,000 to 150,000 g/mol, and more preferably in a range of 10,000 to 50,000 g/mol. It is also preferable to have a viscosity in a range of about 100 to 500,000 mPa·s at 25°C.

In the silicone composition of the present disclosure, a sum of contents of the first and second organopolysiloxanes is preferably in a range of 10 to 80 percent by weight (wt%), and more preferably in a range of 30 to 55 wt%, with respect to the total amount of the silicone composition.

The component (a1) is preferably an organopolysiloxane containing vinyl groups at both ends, and it is more preferable to include an MQ resin.

The component (a2) is preferably an organopolysiloxane containing a vinyl group in at least one of its chains, and it is more preferable to include an MQ resin.

### 2. Component (b)

Component (b) is an organohydrogen siloxane comprising at least two Si-H functional groups per molecule and comprsesing at least one C₆ to C₂₀ aryl group, and is a type of crosslinking agent that reacts with the alkenyl group of the component (a) to form a matrix of polymers with a network structure.

It is preferable that the component (b) includes hydrogen bonded to a silicon atom in a side chain of the polymer chain (e.g., Si-H group). The component (b) may have an organosiloxane structure formed from units represented by general formulas of R₃SiO_{1/2}, R₂SiO_{2/2}, RSiO_{3/2}, and SiO_{4/2}, having a linear structure, a branched chain structure, a cyclic structure, or a linear structure having a partially branched or partially cyclic structure.

The component (b) may include a C₁ to C₂₀ monovalent hydrocarbon group as the organyl group, and more specifically, may include a hydrocarbon group selected from: a C₁ to C₂₀ alkyl group and a C₇ to C₂₀ aralkyl group.

The component (b) essentially includes one or more C₆ to C₂₀ aryl groups, and through this, it is possible to provide adhesion to plastics. It is preferable that the component (b) includes at least one aryl group per molecule. In addition, the component (b) preferably includes two or more different MD resins.

In the silicone composition of the present disclosure, for rapid curing at low-temperature, it is preferable that a content of the organohydrogen siloxane of the component (b) is such that hydrogen atoms bonded with silicon in the component (b) is 0.5 mol or more, and more preferably in a range of 1.5 to 2.5 mol, per 1 mol of the alkenyl group of the components (a1) and (a2).

### 3. Component (c)

Component (c) is an adhesion promoter. The adhesion promoter applicable in the present disclosure is not particularly limited as long as it is generally known in the art, and may include, for example, silane or siloxane, and specifically, silane or siloxane containing an acryl group or an epoxy group. Preferably, it may include an alkoxy silane. Specifically, the adhesion promoter may include, but not limited thereto, for example, methacryloyloxy group-containing trialkoxysilane such as methacryloyloxypropyltrimethoxysilane, methacryloyloxypropyltriethoxysilane, glycidyloxypropyltrimethoxysilane, glycidyloxypropyltriethoxysilane, tris(3-propyltrimethoxysilyl)isocyanurate, trimethoxysilylpropylsuccinic anhydride, allyltrimethoxysilane, 3-glycidoxypropyltrimethoxysilane, 3-glycidoxypropyltriethoxysilane, (epoxycyclohexyl)ethyldimethoxysilane, (epoxycyclohexyl)ethyldiethoxysilane, and combinations thereof. In the silicone composition of the present disclosure, a content of the adhesion promoter is not particularly limited, and for example, may be in a range of about 0.01 to 5 wt%, preferably in a range of about 0.05 to 3 wt%, and more preferably in a range of about 0.1 to 1 wt% with respect to the total amount of the silicone composition.

The silicone composition according to the present disclosure may further include, in addition to the components (a), (b), and (c), one or more components selected from, for example: (d) a coupling agent, (e) a platinum-based catalyst, and (f) a reaction inhibitor.

### 4. Component (d)

Component (d) is a coupling agent which may assist in forming an attractive force with an adherend.

The coupling agent of the component (d) may include, for example, an organic titanate or derivatives thereof containing at least one organyl group selected from: a C₁ to C₃₀ alkyl group, a C₂ to C₃₀ alkenyl group, a C₂ to C₃₀ alkynyl group, a C₁ to C₃₀ alkoxy group or a C₆ to C₃₀ aralkyl group. A content of the coupling agent may be in a range of 0.1 to 0.7 times, and preferably in a range of 0.2 to 0.5 times, a weight of the adhesion promoter.

### 5. Component (e)

Component (e) is a catalyst for a hydrosilylation reaction. The catalyst is a component for promoting a reaction between the aforementioned organopolysiloxane (a) and organohydrogen siloxane (b). The catalyst applicable in the present disclosure is not particularly limited as long as it is used in the hydrosilylation reaction in the art, such as a platinum-based catalyst, a palladium-based catalyst, or a rhodium-based catalyst, among which platinum or a platinum compound having excellent reactivity is preferable. For example, there are platinum clusters, platinum black, platinum chloride, chloroplatinic acid and its salts, alcohol-modified chloroplatinic acid, chloroplatinic acid-olefin complex, platinum coordination compound, and the like, which are each supported in a carrier such as silica or carbon.

In the silicone composition of the present disclosure, a content of the catalyst of the component (e) is not particularly limited, but if the content of the catalyst is too low, effect as the catalyst may not be achieved, and on the other hand, if the content of the catalyst is too high, the accelerating effect of the addition reaction may not be improved, thus being uneconomical. In addition, since a catalyst content affects curing behavior, in order to achieve rapid curing at a low temperature, it is preferable that a content of the catalyst of the component (e) is adjusted to a range of about 0.1 to 1.0 wt%, and specifically in a range of about 0.2 to 0.5 wt%, with respect to the total amount of the composition.

### 6. Component (f)

Component (f) is a reaction inhibitor for controlling a degree of activation. The reaction inhibitor of the component (f) is applied to provide reaction stability at room temperature and induce a reaction at a specific temperature for a desired time.

The reaction inhibitor applicable in the present disclosure is not particularly limited as long as it is used in the hydrosilylation reaction in the art, and may include a material including, for example, divinyldisiloxane, divinylpolysiloxane, diethyl maleate, diethyl fumarate, methylbutynol (e.g., 2-methyl-3-butyn-2-ol), a vinyl group, a maleate group, a fumarate group, and an alkynol group. In particular, in order to achieve rapid curing at a low temperature, a low molecular weight siloxane containing an alkenyl group is most preferable.

In the silicone composition of the present disclosure, it is preferable that a content of the reaction inhibitor is in a range of about 0.1 to 1.0 wt%, and more preferably in a range of about 0.2 to 0.6 wt%, with respect to the total weight of the platinum-based catalyst.

### 7. Other additives

In addition to the components (a) to (e) described above, the silicone composition according to the present disclosure may further optionally include additives commonly known in the art according to the purpose and environment of use of the composition. Examples thereof may include, but are not limited to, dyes, pigments, flame retardants, anti-settling agents, dispersants, thickeners, leveling agents, thixotropic agents, and the like.

Optionally, in the case of a thixotropic adhesive composition, one or more fillers selected from silica, alumina, quartz, boron, and zinc oxide may be further included.

A content of the additives is not particularly limited and may be used within a conventional range known in the art. For example, it may be in a range of about 0.001 to 10 wt%, specifically in a range of about 0.01 to 5 wt%, and more specifically, in a range of about 0.1 to 3 wt%, with respect to the total amount of the silicone composition.

A viscosity of the silicone composition according to the present disclosure is preferably in a range of 1,000 to 300,000 mPa·s, and more preferably in a range of 5,000 to 50,000 mPa·s, at 25°C with respect to a kinematic viscosity in a range of 10 to 25 rpm so as to be applicable to various dispensing equipment.

In addition, in order to maintain a shape after application, a viscosity is preferably in a range of 5,000 to 3,000,000 mPa·s, and more preferably in a range of 100,000 to 1,000,000 mPa·s, at 25°C with respect to a similar dynamic viscosity in a range of 0.1 to 0.5 rpm.

Thermal curing conditions of the silicone composition of the present disclosure are not particularly limited, but in order to minimize dimensional deformation of plastic substrates, for example, a thermal curing temperature may be in a range of about 50 to 90°C, and preferably in a range of about 60 to 80°C, and a thermal curing time period may be in a range of about 5 to 30 minutes, and preferably in a range of about 10 to 15 minutes. As described above, the silicone composition of the present disclosure may be cured at a low temperature in a short time. Accordingly, the silicone composition of the present disclosure is preferably a silicone composition that is rapidly cured at a low temperature.

Since the silicone composition of the present disclosure exhibits excellent adhesion to most substrates including plastics, it may be applicable for bonding, sealing, and assembly to automobiles and electronic components, including adhesion between different types. Specifically, it may be applicable for bonding, sealing, and assembly in at least one of display devices, electronic components, solar cell modules, semiconductors, or automotive components.

For example, it may be used for adhesion of high-performance engineering plastics such as polycarbonate (PC), polyethylene terephthalate (PET), and polymethyl methacrylate (PMMA).

In the case of a display device, for example, it may be used as a housing or a backlight unit in liquid crystal displays (LCD), light emitting diode (LED) displays, or organic electroluminescent (EL) displays.

In addition, the silicone composition of the present disclosure has excellent heat resistance and stress relief properties, so it is particularly advantageous for outdoor display devices or automotive display devices exposed to severe conditions.

The silicone composition according to the present disclosure has advantages in that it exhibits rapid curing behavior and rapid adhesion formation speed, particularly at low temperatures, thus applicable to the field where dimensional stability of a module is important in the process, such as curved displays.

In addition, the silicone composition of the present disclosure may have a viscosity to be applicable to nozzle dispensing, and thus, it may be applicable without being greatly affected by the shape or application area of substrates.

Hereinafter, the present disclosure will be described in detail through embodiments. However, the following embodiments are only illustrative of the present disclosure, and the present disclosure is not limited by the following embodiments.

### [Embodiments 1 to 6, Comparative Examples 1 to 3]

Respective components described below were uniformly heated and mixed at composition ratios (parts by mass) as shown in Table 1 to prepare rapid-curing silicone compositions for bonding plastic substrates according to Embodiments (Embod.) and Comparative Examples (Comp. Ex.), respectively. In each structural formula, Me is a methyl group and Vi is a vinyl group.

**[Table 1]**

| | | Embod.1 | Embod.2 | Embod.3 | Embod.4 | Embod.5 | Embod.6 | Comp. Ex.1 | Comp. Ex.2 | Comp. Ex.3 |
|---|---|---|---|---|---|---|---|---|---|---|
| Composition | a-1 | 28.39% | 0.00% | 0.00% | 0.00% | 0.00% | 28.53% | 0.00% | 0.00% | 0.00% |
| | a-2 | 0.00% | 36.10% | 43.01% | 42.92% | 42.92% | 0.00% | 74.46% | 75.59% | 75.70% |
| | a-3 | 42.58% | 36.10% | 0.00% | 0.00% | 0.00% | 42.80% | 0.00% | 0.00% | 0.00% |
| | a-4 | 0.00% | 0.00% | 28.67% | 28.61% | 28.61% | 0.00% | 0.00% | 0.00% | 0.00% |
| | b-1 | 3.69% | 0.00% | 3.23% | 3.22% | 0.00% | 0.00% | 2.83% | 0.00% | 0.00% |
| | b-2 | 0.00% | 2.31% | 0.00% | 0.00% | 0.00% | 0.00% | 0.00% | 1.36% | 1.36% |
| | b-3 | 3.69% | 0.00% | 3.23% | 0.00% | 3.22% | 3.71% | 0.00% | 0.00% | 0.00% |
| | b-4 | 0.00% | 3.47% | 0.00% | 3.43% | 3.43% | 3.21% | 0.00% | 0.00% | 0.00% |
| | c-1 | 0.07% | 0.07% | 0.07% | 0.07% | 0.07% | 0.07% | 0.07% | 0.08% | 0.00% |
| | c-2 | 0.07% | 0.07% | 0.07% | 0.07% | 0.07% | 0.07% | 0.07% | 0.08% | 0.00% |
| | D | 0.07% | 0.07% | 0.07% | 0.07% | 0.07% | 0.07% | 0.07% | 0.08% | 0.08% |
| | E | 0.14% | 0.14% | 0.14% | 0.14% | 0.14% | 0.14% | 0.15% | 0.15% | 0.15% |
| | F | 21.29% | 21.66% | 21.51% | 21.46% | 21.46% | 21.40% | 22.34% | 22.68% | 22.71% |
| | Total components | 100.00% | 100.00% | 100.00% | 100.00% | 100.00% | 100.00% | 100.00% | 100.00% | 100.00% |

The following components were used for the component (a).
a-1 : (CH₂=CHMe₂SiO(SiMe₂O)xSiMe₂CH=CH₂), Mw=16500g/mol, Average chain length=210
a-2 : (CH₂=CHMe₂SiO(SiMe₂O)xSiMe₂CH=CH₂), Mw=36800g/mol, Average chain length=441
a-3 : M₅M^{Vi}₁Q₄
a-4 : M₇M^{Vi}₁Q₁₂

The following components were used for the component (b).
b-1 : Me₃SiO(Me₂SiO)x(MeHSiO)ySiMe₃ (average chain, x+y=100)
b-2 : Me₃SiO(Me₂SiO)x(MeHSiO)ySiMe₃ (average chain, x+y=45)
b-3 : M-D^{Ph}₄₀-DH₂₀-M
b-4 : H-M₂-D^{Ph}₂-M₂-H

The following components were used for the component (c).
c-1 : Glycidoxypropyltrimethoxysilane
c-2 : Methacryloxypropyltrimethoxysilane

As the component (d), divinyltetramethyldisiloxane platinum (0) was used.

As the component (e), methylbutynol was used.

As the component (f), alumina having an average particle size (D50) of 1 µm was used.

### [Experimental example]

Viscosity, hardness, tensile adhesion, shear adhesion, and the like were measured for the compositions of Embodiments 1 to 6 and Comparative Examples 1 to 3, and the results are shown in Table 2 below.

**[Table 2]**

| | | Embod.1 | Embod.2 | Embod.3 | Embod.4 | Embod.5 | Embod.6 | Comp. Ex.1 | Comp. Ex.2 | Comp. Ex.3 |
|---|---|---|---|---|---|---|---|---|---|---|
| | Viscosity | 20200 | 13700 | 18500 | 18200 | 19300 | 11400 | 6850 | 6880 | 6880 |
| | Hardness | 17 A | 16 a | 23 A | 20 A | 22 A | 22 A | 5 A | 5 A | 5 A |
| Eval. result | Tensile adhesion | 10 | 9 | 13 | 5 | 13 | 10 | 2 | 2 | 2 |
| | (Fracture mode) | Cohesive | Adhesive | Cohesive | Cohesive | Cohesive | Cohesive | Adhesive | Adhesive | Adhesive |
| | Shear adhesion | 12 | 13 | 11 | 6 | 15 | 11 | 2 | 2 | 2 |
| | (Fracture mode) | Adhesive | Cohesive | Cohesive | Cohesive | Cohesive | Cohesive | Adhesive | Adhesive | Adhesive |

The viscosity was measured using a rheometer (Anton Paar, CP50-2, 25/shear rate), and the hardness was measured using a Shore A rubber durometer.

The tensile adhesion was measured as follows. First, the silicone composition was bonded (e.g., laminated) to a thickness of 0.3 mm between polycarbonate substrates (width 50 mm x length 100 mm x thickness 5 mm), and cured at 75°C for 15 minutes. This specimen was displaced in a tensile direction at a rate of 300 mm/min in accordance with ASTM D2651, and "tensile adhesive strength (kgf/cm²) of the rapid-curing silicone composition for bonding plastic substrates" was determined from an obtained maximum stress. In such a case, if a fracture mode (e.g., failure mode) remained on both substrates, it was determined as 'cohesive', and if it remained on only one substrate, it was determined as 'adhesive'.

The shear adhesion was measured as follows. First, the silicone composition was bonded (e.g., laminated) to a thickness of 0.3 mm between polycarbonate substrates (width 25 mm x length 100 mm x thickness 2 mm), and cured at 75°C for 15 minutes. This specimen was displaced in a shear direction at a rate of 300 mm/min in accordance with ASTM D-3163, and "shear adhesive strength (kgf/cm²) of the rapid-curing silicone composition for bonding plastic substrates" was determined from an obtained maximum stress. In such a case, if a fracture mode (e.g., failure mode) remained on both substrates, it was determined as 'cohesive', and if it remained on only one substrate, it was determined as 'adhesive'.

In the case of Embodiments 1 to 6, all the compositions were cured (there was no uncured portion) when cured at 75°C for 15min, and showed a cohesive fracture mode overall, except that some showed an adhesive fracture mode, thus having stable adhesive properties to polycarbonate, which is one of substrates difficult to be bonded.

In the case of Comparative Examples 1 to 3, the compositions which lack part of the components (a) and (b) of the present disclosure all exhibited an adhesive fracture mode to polycarbonate, so it was appreciated that they were not applicable for bonding plastic substrates.

## Claims

1. A silicone composition comprising:
(a1) a first organopolysiloxane comprising a C₂ to C₂₀ alkenyl group bonded to at least one Si at both ends or a chain, the first organopolysiloxane formed from a unit represented by (R₃SiO_{1/2})ₐ(R₂SiO_{2/2})_{b}(RSiO_{3/2})_{c}(SiO_{4/2})_{d} (wherein a is in a range of 1 to 50, b is in a range of 100 to 500, c is in a range of 0 to 50, and d is in a range of 0 to 50); and
(a2) a second organopolysiloxane comprising a C₂ to C₂₀ alkenyl group bonded to at least one Si at both ends or a chain, and comprising at least one unit represented by SiO_{4/2}; and
(b) an organohydrogen siloxane comprising at least two SiH functional groups per molecule and comprising at least one C₆ to C₂₀ aryl group,
wherein the component (b) comprises two or more different MD resins.

2. The silicone composition of claim 1, wherein a weight average molecular weight of the (a1) and/or the (a2) is in a range of 1,000 to 150,000 g/mol.

3. The silicone composition of claim 1, wherein a sum of contents of the (a1) and the (a2) is in a range of 10 to 80 percent by weight (wt%) with respect to the total amount of the silicone composition.

4. The silicone composition of claim 1, wherein the (a1) comprises an MQ resin containing vinyl groups at both ends, and
the (a2) comprises an MQ resin containing a vinyl group in at least one of chains.

5. The silicone composition of claim 1, wherein the (b) comprises one or more phenyl groups per molecule.

6. The silicone composition of claim 1, wherein hydrogen atoms bonded to silicon of the (b) is 0.5 mol or more with respect to 1 mol of the alkenyl group of both of the (a1) and the (a2).

7. The silicone composition of claim 1, further comprising (c) an adhesion promoter.

8. The silicone composition of claim 7, wherein the (c) is alkoxysilane.

9. The silicone composition of claim 8, wherein a content of the (c) is in a range of 0.01 to 5 wt% with respect to the total amount of the silicone composition.

10. The silicone composition of claim 1, further comprising (d) a coupling agent.

11. The silicone composition of claim 12, wherein the (d) comprises an organic titanate or a derivative thereof comprising at least one organyl group selected from: a C₁ to C₃₀ alkyl group, a C₂ to C₃₀ alkenyl group, a C₂ to C₃₀ alkynyl group, a C₁ to C₃₀ alkoxy group or a C₆ to C₃₀ aralkyl group.

12. The silicone composition of claim 11, wherein a content of the (d) is in a range of 0.1 times to 1.5 times a weight of the adhesion promoter.

13. The silicone composition of claim 1, further comprising (e) a catalyst for a hydrosilylation reaction.

14. The silicone composition of claim 13, wherein the (e) is comprised in an amount in a range of 0.1 to 1.0 wt% with respect to the total amount of the silicone composition.

15. The silicone composition of claim 1, further comprising (f) a reaction inhibitor.

16. The silicone composition of claim 1, wherein the (f) is included in an amount in a range of 0.1 to 10 wt% with respect to the total weight of the (e).

17. The silicone composition of claim 1, being a silicone composition rapidly curing at a low temperature that may be cured within 30 minutes at a temperature of 90°C or less.

18. The silicone composition of claim 1, having a viscosity in a range of 1,000 to 300,000 mPa·s at 25°C with respect to a kinematic viscosity in a range of 10 to 25 rpm, and having a viscosity in a range of 5,000 to 3,000,000 mPa·s at 25°C with respect to a similar dynamic viscosity in a range of 0.1 to 0.5 rpm, wherein the kinematic viscosity and viscosity are measured using a rheometer as defined in the specifications.

19. The silicone composition of claim 1, applicable to bonding, sealing, or assembly in display devices, electronic components, solar cell modules, semiconductors, or automotive components.

20. The silicone composition of claim 1 for bonding plastics.

## Patentansprüche

1. Siliconzusammensetzung, umfassend:
(a1) ein erstes Organopolysiloxan mit einer an mindestens ein Si gebundenen C₂-C₂₀-Alkenylgruppe an beiden Enden oder einer Kette, wobei das erste Organopolysiloxan aus einer Einheit, die durch (R₃SiO_{1/2})ₐ(R₂SiO_{2/2})_{b}(RSiO_{3/2})_{c}(SiO_{4/2})_{d} (wobei a in einem Bereich von 1 bis 50 liegt, b in einem Bereich von 100 bis 500 liegt, c in einem Bereich von 0 bis 50 liegt und d in einem Bereich von 0 bis 50 liegt) wiedergegeben wird, gebildet ist; und
(a2) ein zweites Organopolysiloxan mit einer an mindestens ein Si gebundenen C₂-C₂₀-Alkenylgruppe an beiden Enden oder einer Kette und mit mindestens einer Einheit, die durch SiO_{4/2} wiedergegeben wird; und
(b) ein Organohydrogensiloxan mit mindestens zwei SiHfunktionellen Gruppen pro Molekül und mit mindestens einer C₆-C₂₀-Arylgruppe,
wobei die Komponente (b) zwei oder mehr verschiedene MD-Harze umfasst.

2. Siliconzusammensetzung nach Anspruch 1, wobei ein gewichtsmittleres Molekulargewicht des (a1) und/oder des (a2) in einem Bereich von 1000 bis 150.000 g/mol liegt.

3. Siliconzusammensetzung nach Anspruch 1, wobei eine Summe der Gehalte des (a1) und des (a2) in einem Bereich von 10 bis 80 Gewichtsprozent (Gew.-%), bezogen auf die Gesamtmenge der Siliconzusammensetzung, liegt.

4. Siliconzusammensetzung nach Anspruch 1, wobei das (a1) ein MQ-Harz mit Vinylgruppen an beiden Enden umfasst und
das (a2) ein MQ-Harz mit einer Vinylgruppe in mindestens einer der Ketten umfasst.

5. Siliconzusammensetzung nach Anspruch 1, wobei das (b) eine oder mehrere Phenylgruppen pro Molekül umfasst.

6. Siliconzusammensetzung nach Anspruch 1, wobei an Silicium gebundene Wasserstoffatome des (b) 0,5 mol oder mehr, bezogen auf 1 mol der Alkenylgruppe sowohl des (a1) als auch des (a2) betragen.

7. Siliconzusammensetzung nach Anspruch 1, ferner umfassend (c) einen Haftvermittler.

8. Siliconzusammensetzung nach Anspruch 7, wobei es sich bei (c) um Alkoxysilan handelt.

9. Siliconzusammensetzung nach Anspruch 8, wobei ein Gehalt des (c) in einem Bereich von 0,01 bis 5 Gew.-%, bezogen auf die Gesamtmenge der Siliconzusammensetzung, liegt.

10. Siliconzusammensetzung nach Anspruch 1, ferner umfassend (d) ein Kupplungsmittel.

11. Siliconzusammensetzung nach Anspruch 12, wobei das (d) ein organisches Titanat oder ein Derivat davon mit mindestens einer Organylgruppe, die aus einer C₁-C₃₀-Alkylgruppe, einer C₂-C₃₀-Alkenylgruppe, einer C₂-C₃₀-Alkinylgruppe, einer C₁-C₃₀-Alkoxygruppe oder einer C₆-C₃₀-Aralkylgruppe ausgewählt ist, umfasst.

12. Siliconzusammensetzung nach Anspruch 11, wobei ein Gehalt des (d) in einem Bereich des 0,1-fachen bis 1,5-fachen eines Gewichts des Haftvermittlers liegt.

13. Siliconzusammensetzung nach Anspruch 1, ferner umfassend (e) einen Katalysator für eine Hydrosilylierungsreaktion.

14. Siliconzusammensetzung nach Anspruch 13, wobei das (e) in einer Menge in einem Bereich von 0,1 bis 1,0 Gew.- % bezogen auf die Gesamtmenge der Siliconzusammensetzung, enthalten ist.

15. Siliconzusammensetzung nach Anspruch 1, ferner umfassend (f) einen Reaktionsinhibitor.

16. Siliconzusammensetzung nach Anspruch 1, wobei das (f) in einer Menge in einem Bereich von 0,1 bis 10 Gew.- %, bezogen auf das Gesamtgewicht des (e), enthalten ist.

17. Siliconzusammensetzung nach Anspruch 1, bei der es sich um eine bei niedriger Temperatur schnell härtende Siliconzusammensetzung handelt, die innerhalb von 30 Minuten bei einer Temperatur von 90 °C oder weniger gehärtet werden kann.

18. Siliconzusammensetzung nach Anspruch 1 mit einer Viskosität in einem Bereich von 1000 bis 300.000 MPa·s bei 25 °C im Hinblick auf eine kinematische Viskosität in einem Bereich von 10 bis 25 U/min und mit einer Viskosität in einem Bereich von 5000 bis 3.000.000 MPa·s bei 25 °C im Hinblick auf eine ähnliche dynamische Viskosität in einem Bereich von 0,1 bis 0,5 U/min, wobei die kinematische Viskosität und die Viskosität mit einem Rheometer gemäß den Spezifikationen gemessen werden.

19. Siliconzusammensetzung nach Anspruch 1, anwendbar auf Verkleben, Versiegeln oder Zusammenfügen in Anzeigevorrichtungen, Elektronikbauteilen, Solarzellenmodulen, Halbleitern oder Kraftfahrzeugteilen.

20. Siliconzusammensetzung nach Anspruch 1 zum Verkleben von Kunststoffen.

## Revendications

1. Composition de silicone comprenant :
(a1) un premier organopolysiloxane comportant un groupe alcényle en C₂ à C₂₀ lié à au moins un Si aux deux extrémités ou une chaîne, le premier organopolysiloxane formé d'un motif représenté par (R₃SiO_{1/2})ₐ(R₂SiO_{2/2})_{b}(RSiO_{3/2})_{c}(SiO_{4/2})_{d} (à étant dans une plage de 1 à 50, b étant dans une plage de 100 à 500, c étant dans une plage de 0 à 50, et d étant dans une plage de 0 à 50) ; et
(a2) un second organopolysiloxane comprenant un groupe alcényle en C₂ à C₂₀ lié à au moins un Si aux deux extrémités ou une chaîne, et comprenant au moins un motif représenté par SiO_{4/2}; et
(b) un organohydrogénosiloxane comprenant au moins deux groupes fonctionnels SiH par molécule et comprenant au moins un groupe aryle en C₆ à C₂₀,
dans laquelle le composant (b) comprend deux résines MD différentes ou plus.

2. Composition de silicone selon la revendication 1, dans laquelle le poids moléculaire moyen en poids du (a1) et/ou du (a2) est dans une plage de 1 000 à 150 000 g/mole.

3. Composition de silicone selon la revendication 1, dans laquelle la somme des teneurs du (a1) et du (a2) est dans une plage de 10 à 80 % en poids (% en poids) par rapport à la quantité totale de la composition de silicone.

4. Composition de silicone selon la revendication 1, dans laquelle le (a1) comprend une résine MQ contenant des groupes vinyle aux deux extrémités, et
le (a2) comprend une résine MQ contenant un groupe vinyle dans au moins une des chaînes.

5. Composition de silicone selon la revendication 1, dans laquelle le (b) comprend un ou plusieurs groupes phényle par molécule.

6. Composition de silicone selon la revendication 1, dans laquelle les atomes d'hydrogène liés au silicium du (b) sont de 0,5 mole ou plus par rapport à 1 mole du groupe alcényle d'à la fois le (a1) et le (a2).

7. Composition de silicone selon la revendication 1, comprenant en outre (c) un promoteur d'adhérence.

8. Composition de silicone selon la revendication 7, dans laquelle le (c) est un alcoxysilane.

9. Composition de silicone selon la revendication 8, dans laquelle une teneur du (c) est dans une plage de 0,01 à 5 % en poids par rapport à la quantité totale de la composition de silicone.

10. Composition de silicone selon la revendication 1, comprenant en outre (d) un agent de couplage.

11. Composition de silicone selon la revendication 12, dans laquelle le (d) comprend un titanate organique ou un dérivé de celui-ci comprenant au moins un groupe organyle choisi parmi : un groupe alkyle en C₁ à C₃₀, un groupe alcényle en C₂ à C₃₀, un groupe alcynyle en C₂ à C₃₀, un groupe alcoxy en C₁ à C₃₀ ou un groupe aralkyle en C₆ à C₃₀.

12. Composition de silicone selon la revendication 11, dans laquelle une teneur du (d) est dans une plage de 0,1 fois à 1,5 fois un poids du promoteur d'adhérence.

13. Composition de silicone selon la revendication 1, comprenant en outre (e) un catalyseur pour une réaction d'hydrosilylation.

14. Composition de silicone selon la revendication 13, dans laquelle le (e) est compris en une quantité dans une plage de 0,1 à 1,0 % en poids par rapport à la quantité totale de la composition de silicone.

15. Composition de silicone selon la revendication 1, comprenant en outre (f) un inhibiteur de réaction.

16. Composition de silicone selon la revendication 1, dans laquelle le composant (f) est inclus en une quantité dans la plage de 0,1 à 10 % en poids par rapport au poids total du (e).

17. Composition de silicone selon la revendication 1, qui est une composition de silicone durcissant rapidement à une basse température qui peut être durcie en 30 minutes à une température de 90 °C ou moins.

18. Composition de silicone selon la revendication 1, ayant une viscosité dans une plage de 1 000 à 300 000 mPa·s à 25 °C par rapport à une viscosité cinématique dans une plage de 10 à 25 tpm, et ayant une viscosité dans une plage de 5 000 à 3 000 000 mPa·s à 25 °C par rapport à une viscosité dynamique similaire dans une plage de 0,1 à 0,5 tpm, la viscosité cinématique et la viscosité étant mesurées à l'aide d'un rhéomètre tel que défini dans les descriptions.

19. Composition de silicone selon la revendication 1, applicable pour une liaison, un scellement ou un assemblage dans des dispositifs d'affichage, des composants électroniques, des modules de cellules solaires, des semi-conducteurs ou des composants d'automobile.

20. Composition de silicone selon la revendication 1 pour lier des matières plastiques.
